# EUROPÄISCHE PATENTSCHRIFT

(11) **EP 2 917 726 B1**
(45) Veröffentlichungstag und Bekanntmachung des Hinweises auf die Patenterteilung: **28.07.2021**
(21) Anmeldenummer: 13789765.8
(22) Anmeldetag: 07.11.2013
(51) Int. Cl.: G01N 21/47, G01N 27/30, G01N 21/64, G01N 27/416, B82Y 15/00

(54) **OPTISCHER PH-WERT-SENSOR**
OPTICAL PH VALUE SENSOR
CAPTEUR DE PH OPTIQUE

(30) Priorität: 09.11.2012 DE 102012021933
(43) Veröffentlichungstag der Anmeldung: 16.09.2015
(73) Patentinhaber: Justus-Liebig-Universität Giessen, 35390 Giessen (DE)
(72) Erfinder: EICKHOFF, Martin, 35398 Gießen (DE); HELWIG, Andreas, 80469 München (DE); MÜLLER, Gerhard, 85567 Grafing (DE); TEUBERT, Jörg, 35394 Giessen (DE); PAUL, Sumit, 81677 München (DE); WALLYS, Jens, 35390 Giessen (DE)
(74) Vertreter: Stumpf, Peter
(86) Internationale Anmeldenummer: PCT/EP2013/073282
(87) Internationale Veröffentlichungsnummer: WO 2014/072414

(56) Entgegenhaltungen:
- WEIDEMANN O ET AL: "GaN quantum dots as optical transducers for chemical sensors", APPLIED PHYSICS LETTERS, AMERICAN INSTITUTE OF PHYSICS, US, Bd. 94, Nr. 11, 17. März 2009 (2009-03-17) , Seiten 113108-1-113108-3, XP012118449, ISSN: 0003-6951, DOI: 10.1063/1.3100301
- SUMIT PAUL ET AL: "Opto-chemical sensor system for the detection of H2 and hydrocarbons based on InGaN/GaN nanowires", SENSORS AND ACTUATORS B: CHEMICAL, Bd. 173, 19. Juni 2012 (2012-06-19), Seiten 120-126, XP055077574, ISSN: 0925-4005, DOI: 10.1016/j.snb.2012.06.022
- HYE SEONG JUNG ET AL: "Photocatalysis Using GaN Nanowires", ACS NANO, Bd. 2, Nr. 4, 3. April 2008 (2008-04-03), Seiten 637-642, XP055099284, ISSN: 1936-0851, DOI: 10.1021/nn700320y

## Beschreibung

Die vorliegende Erfindung betrifft einen optischen pH-Wert-Sensor, bei dem der pH-Wert ohne Farbstoffmoleküle ermittelt wird. Es wird hierbei die Photolumineszenz oder die Fluoreszenz einer sensitiven Schicht ausgenutzt. Zusätzlich wird ein elektrochemisches Potential angelegt. Dies ermöglicht es zum einen, die Intensität der Photolumineszenz oder der Fluoreszenz zu erhöhen und zum anderen, die Sensitivität bzgl. Veränderung des pH Wertes zu erhöhen. Außerdem ist nur so eine quantitative Bestimmung des pH-Wertes möglich. Die Photolumineszenz oder die Fluoreszenz weist damit eine Intensität auf, die es erst ermöglicht die Photolumineszenzintensität oder Fluoreszenzintensität einem pH-Wert zuzuordnen.

### [Stand der Technik]

In der US 2002117659A1 wurde die Nutzung der Photolumineszenz zur Ermittlung des pH-Wertes erwähnt. Nachteilig ist jedoch, dass die Intensitäten nicht klar den pH-Werten zugeordnet werden können. Obwohl in Fig. 15b Stufen für die unterschiedlichen pH-Werte sichtbar sind, schwanken die Intensitäten so stark, dass aufgrund einer Messung bei pH 4, ein Interpretationsbereich von pH 3,5 bis pH 8 möglich ist, d.h. vom sauren über neutral bis alkalisch. Die Stufen von pH 4 und pH 7 liegen aufgrund der Schwankungen der Intensität so dicht beieinander, dass eine Zuordnung zu pH 5 oder 6 kaum möglich ist. Mit dieser Anordnung ist eine zuverlässige Messung von im Bereich von pH 7 (neutraler Bereich) nicht durchführbar.

Weidemann et al, Appl. Phys. Lett. 94, 113108, 2009, betrifft die Messung von molekularem H2 in einem Gasgemisch wobei eine photolumineszierende Schicht (GaN/AIN Quantenpunkten) von einer katalytisch aktiven Platin Schicht abgedeckt ist. Der Strahlengang ist durch diese Platin Schicht hindurch vorgesehen. Sumit et al, Sensors and Actuators B 173, 120-126, 2012, betrifft einen Gassensor mit dessen Hilfe molekularer Wasserstoff oder C2H2 delektiert werden können wobei eine Pt-Schicht auf eine photolumineszierende Nanodrahtstruktur (InGaN/GaN) aufgetragen wird. Hye Seong Jung et al, ACS Nano, vol. 2, Nr. 4, 637-642, 2008, betrifft eine Nanodrahtschicht bestehend u.a. aus kristallinem GaN. Zur Beurteilung der photokatalytischen Aktivität wurden GaN dünnen Folien, Punktarrays und Nanodrähten verglichen, indem die Menge einer Farbstofflösung gemessen wurde, die durch das GaN-Material unter UV-Licht photoabgebaut wurde, bei verschiedenen pH-Werten. Die zuverlässige Messung des neutralen Bereichs ist besonders bei der Trinkwasserversorgung ein notwendiges Kriterium.

### [Aufgabe]

Aufgabe der vorliegenden Erfindung ist es, die Nachteile des Standes der Technik mittels des erfindungsgemäßen pH-Wert-Sensors zu beseitigen bzw. zu umgehen.

### [Lösung der Aufgabe]

Diese Aufgabe wird durch den Sensor nach Anspruch 1 gelöst. In den pH-Wert-Sensor wird eine pH-Wert abhängige, photolumineszierende oder fluoreszierende Schicht eingebracht und an diese Schicht ein elektrisches Potential angelegt Das hat den entscheidenden Vorteil, dass sich die Werte der Photolumineszenzintensitäten oder Fluoreszenzintensitäten der einzelnen pH-Werte einen so unterschiedlichen Abstand haben, so dass eine klare Zuordnung der Intensitäten zu den pH-Werten möglich ist. Dadurch wird die zuverlässige Messung des neutralen Bereiches erst ermöglicht.

Der entsprechende pH-Wert-Sensor ist als Schichtsystem aufgebaut. Auf eine Trägerschicht wird eine photolumineszierende Schicht aufgetragen. Das erfolgt bevorzugt mittels Plasma-assistierter-Molekular-Strahl Epitaxie, physikalischer Gasphasenabscheidung (PVD), chemischer Gasphasenabscheidung (CVD), Metallorganischer Gasphasenabscheidung (MOCVD), plasmaunterstützter chemischer Gasphasenabscheidung (PECVD), Sputtern, Sol-Gel Deposition, Druckverfahren oder elektrochemisch.

Die Trägerschicht umfasst dabei Materialien wie Silizium, Siliziumcarbid oder transparente, bevorzugt kristalline (einkristallin, polykristallin, nanokrstallin, ...) Materialien wie Diamant, Saphir, Zinkoxid, Galliumnitrid, Aluminiumgalliumnitirid, auch Glas (auch Quarzglas oder Glasfaser). Die Trägerschicht ist alternativ als kombiniertes Schichtsystem der genannten Träger ausgebildet. Bevorzugt werden einkristalline Materialien wie Silizium (100), Silizium (111) oder Siliziumcarbid (3C, 4H, 6H, ...) eingesetzt. Zur Sicherung der chemischen Beständigkeit wird in alkalischen Umgebungen bevorzugt die leitfähige Trägerschicht p-dotiert, wenn ihre Bandlücke kleiner als die Energie des zur Anregung der Lumineszenz der sensitiven Schicht verwendeten Lichtes ist. Alternativ wird in sauren, neutralen und schwach alkalischen Medien die Siliziumwafer oder die Trägerschichten n-Typ dotiert (Elemente der 15. oder 16. Gruppe, z.B. P, S, As, Se, Sb, Te, Bi, Po) bei schwach sauren, neutralen und alkalischen Medien p-Typ (Elemente der 2. oder 13. Gruppe, z.B. Be, B, Mg, AI, Ca, Ga, Sr, In, Ba, Tl) dotiert. Besonders bevorzugt wird p-dotiertes Silizium (111) eingesetzt, da die elektrochemische Stabilität und damit die Stabilität gegen die Messumgebung für positive wie negative Potentiale bei diesem Trägersystem erhöht ist. Das n oder p-dotierte Silizium ist elektrisch leitfähig.)
Bei einem Träger ohne elektrische Leitfähigkeit (z.B. Saphir) wird eine elektrisch leitfähige Schicht aufgebracht. Diese elektrisch leitfähige Schicht umfasst z.B. n oder p-dotiertes Silizium, transparentes Indium-Zinn-Oxid (ITO), wobei die Auswahl der Materialien nicht auf diese Beispiele beschränkt ist. Die leitfähige Schicht ist auch als Drahtnetz oder Leiterbahnennetz z.B. aus Kupfer, Aluminium, Silber, Gold oder dotiertem Silizium herstellbar.

Alternativ ist bei einem nicht elektrisch leitfähigen Träger die photolumineszierende oder fluoreszierende Schicht elektrisch leitfähig.

Die photolumineszierende oder fluoreszierende Schicht umfasst Materialien wie Galliumnitrid, Indiumnitrid, Indiumphosphid, Indiumgalliumarsenid, Kohlenstoffnanoröhren (einwandig, mehrwandig), Galliumarsenid, Germanium, Cadmiumselenid, Aluminiumnitrid, Zinkoxid, Cadmiumoxid, Magnesiumoxid, Indiumaluminiumarsenid, Indium. Diese Materialien können mit Donatoren oder Akzeptoren oder Lumineszenzzentren wie z.B. Seltenen Erdmetallen (Sc, Y, La, Ce, Pr, Nd, Pm, Sm, Eu, Gd, Tb, Dy, Ho, Er, Tm, Yb, Lu) dotiert sein.

Die Stabilität gegenüber den Messbedingungen kann durch eine auf die photolumineszierende oder fluoreszierende Schicht zusätzlich aufgebrachte Diamantschicht weiter erhöht werden. Die zusätzliche Diamantbeschichtung wird nur in ausgewählten Fällen eingesetzt.

Damit wurde eine photolumineszierende oder fluoreszierende Schicht auf einen leitfähigen Träger aufgebracht. Im folgenden schließt photolumineszierend den Begriff fluoreszierend mit ein und fluoreszierend den Begriff photolumineszierend.

An die photolumineszierende Schicht wird ein Potential angelegt, wobei die photolumineszierende Schicht als Arbeitselektrode elektrisch geschaltet wird.

Die entsprechende Gegenelektrode wird so angeordnet, dass diese isoliert zur Arbeitselektrode, aber im Kontakt zum zu messenden Medium ist.

Bevorzugt wird eine Dreielektrodenschaltung verwendet, so dass die dritte Elektrode (Referenzelektrode) Kontakt zum zu messenden Medium hat und von den anderen beiden Elektroden elektrisch isoliert ist. Das Material für die Gegenelektrode und Referenzelektrode umfasst zum Beispiel Platin, Silber, Gold oder Aluminium, Kalomel oder Silber/Silbernitrat (Ag/AgCl).

Die Gegen- und Referenzelektrode sind bevorzugt in je einer eigenen Halterung um die Arbeitselektrode angeordnet. Alternativ sind mehrere Elektroden elektrisch isoliert auf einem oder mehreren Trägern angeordnet.

Die Potentiale der Elektroden werden durch ein Steuergerät eingestellt.

Das Anlegen eines Potentials hat zur Folge, dass die Intensitäten der Photolumineszenz oder Fluoreszenz verstärkt werden, so dass die pH-Werte durch die Erfassung der Intensität genauer abgrenzbar sind und nicht bei unterschiedlichen pH-Werten ineinander übergehen.

Weiterhin kann zusätzlich durch das Anlegen eines Potentials die photochemische Degradation zumindest teilweise unterdrückt werden.

Zusätzlich wird eine höhere elektrochemische Stabilität der Elektroden bzw. des Trägers gegen das zu messende Medium zumindest in bestimmten Potentialbereichen erreicht. So wird z.B. bei sauren Medien und negativen Potentialen der Arbeitselektrode die chemische Resistenz der Arbeitselektrode und des Trägers erhöht.

Weiterhin wird eine Lichtquelle benötigt, die die photolumineszierende oder fluoreszierende Schicht zur Photolumineszenz oder Fluoreszenz anregt. Die Lichtquelle sendet Licht im VIS und oder UV (800 bis ca. 200 nm) aus. Bevorzugt wird eine Leuchtdiode oder Laserdiode eingesetzt (z.B. InGaN, 405 nm) oder mehrere Laser z.B. HeCd-Laser (325nm und 441,6 nm) für Galliumnitrid und oder Frequenzverdoppelter Nd:YVO₄-Laser (532 nm) für Indiumgalliumnitrid eingesetzt. Die Anregungswellenlänge hängt von der entsprechenden Lichtquelle ab. Sie muss ausreichend sein, so dass eine Photolumineszenz oder Fluoreszenz in der Nanostruktur des Sensors angeregt wird. Bei der Einbringung von einzelnen InGaN Quantenpunkten in das Galliumnitrid ist die Anregungswellenlänge von UV nach VIS (von 200 nm bis zu über 500 nm) verschiebbar. Diese zeigen ebenfalls eine pH-Wert abhängige Photolumineszenz deren Intensität und Sensitivität durch ein Potential kontrolliert wird.

Bevorzugt wird das Licht mit einem Linsensystem oder einem Gitter auf die photolumineszierende Schicht in einem oder mehreren Punkten fokussiert oder möglichst gleichmäßig verteilt.

Die Photolumineszenzintensitäten werden mittels Detektor (z.B. Photodetektor, Photomultiplier) ausgelesen. Der Detektor erfasst bevorzugt parallel oder seriell mehrere Wellenlängen der Photolumineszenz. Bevorzugt wird ein charged coupled device (CCD)-Sensor eingesetzt, der ortsaufgelöst mehrere Wellenlängen erfasst. Alternativ oder zusätzlich ist auch ein Spektrometer einsetzbar. Zur Messung durch Detektion bei einer Wellenlänge kommt ein Photodetektor, auch in Verbindung mit einem geeigneten Filter, zur Anwendung.

Das Anregungslicht wird aufgrund der anderen Wellenlänge in Vergleich zur Photolumineszenz oder Fluoreszenz mit Filtern entfernt. Bevorzugt wird eine rückseitige Photolumineszenz- oder Fluoreszenzanregung und eine vorderseitige Photolumineszenz- oder Fluoreszenzdetektion bei Verwendung eines für Anregungs- und Photolumineszenzwellenlänge durchlässigen Substrates durchgeführt.

Die photolumineszierende oder fluoreszierende Schicht ist bevorzugt als Nanodraht ausgebildet. Es hat den Vorteil, dass die Oberfläche für das zu messende Medium stark vergrößert ist. Weiterhin wird dadurch eine Ortsauflösung der pH-Wert-Messung ermöglicht. Bei Verwendung eines Detektors mit mehreren Photozellen z.B. CCD-Sensor, erfolgt eine ortsaufgelöste Messung des pH-Wertes.

Somit sind unter einem Mikroskop z.B. die unterschiedlichen pH-Werte in der Umgebung oder im Inneren einer biologischen Zelle ortsaufgelöst, permanent messbar und damit im Verlauf der Zeit darstellbar. Damit ist überhaupt der Verlauf der pH-Werte in der Umgebung oder im Inneren einer biologischen Zelle bei unterschiedlichen Bedingungen z.B. Wechsel des Mediums erfassbar und als chemischer Kontrast dem optischen Mikroskopbild überlagerbar. Das kann z.B. zum besseren Verständnis der Funktionsweise einer biologischen Zelle führen. Ebenso ist durch die Abhängigkeit der Photolumineszenzintensität vom elektrochemischen Potential die elektrische Aktivität von Zellen, z.B. Neuronen, orts- und zeitaufgelöst darstellbar, wobei die erreichbare Ortsauflösung besser als 1 µm ist.

Beim Einbau des Sensors in ein Flüssigkeitssystem, ist ein transparenter Bereich notwendig. Bevorzugt wird das System (z.B. Rohr) an gegenüberliegenden Seiten etwas abgeflacht. In die damit erhaltenen geraden Seiten (Wände) werden Ausnehmungen eingebracht, so dass auf einer Seite der Sensor und auf der anderen Seite eine für Photolumineszenz oder Fluoreszenz transparente Scheibe eingesetzt wird. Die Gegen- und Referenzelektrode wird bevorzugt durch Rohrwanddurchbrüche in den Kontakt mit dem Medium gebracht.

Beim aufgebauten pH-Wert-Sensor werden unterschiedliche Potentiale angelegt und die Kalibrierkurven für die Zuordnung der Photolumineszenz- oder Fluoreszenzintensitäten aufgenommen. Das eingestellte Potential wird dabei je nach verwendetem Substratmaterial in einem Bereich von ca. -1,5 V bis +1,5 V variiert, wobei auch nur Teile vom Bereich eingestellt werden. Bei eingestelltem Potential wird die photolumineszierende oder fluoreszierende Schicht mit dem Laser oder Photodiode zur Photolumineszenz oder Fluoreszenz angeregt. Bei direkter Anregung der nanostrukturierten Seite wird bevorzugt ein Filter für die Wellenlänge des Anregungslichtes verwendet. Alternativ wird das Lock in - Verfahren (z.B. mit Chopper - rotierende Sektorblende) oder bei rückseitiger Anregung kein Filter eingesetzt. Mit dem Detektor werden entweder ortsaufgelöst oder integral die Photolumineszenz- oder Fluoreszenzintensitäten erfasst.

Aus den Photolumineszenzintensitäten oder Fluoreszenzintensitäten werden entsprechend der Kalibrierkurven die pH-Werte ermittelt.

Eine alternative Auswertung sieht vor, durch Variation des Potentials den maximalen Anstieg der Photolumineszenzintensität oder Fluoreszenzintensität zu bestimmen. Die Ableitung der Intensität nach dem angelegten Potential ergibt ein Signal mit einem Maximum bei dem höchsten Anstieg der Photolumineszenzintensitätsänderung oder Fluoreszenzintensitätsänderung pro Potentialänderung. Dabei wird die Photolumineszenzintensität oder Fluoreszenzintensität bei einem Potential gemessen. Bei der anschließenden Messung wird das Potential variiert. Die jetzt erhaltene Photolumineszenzintensität oder Fluoreszenzintensität wird erfasst und die Änderung des Signals im Vergleich zum vorherigen Signal bestimmt. Dieser Zyklus wird solange wiederholt bis alle relevanten Photolumineszenzintensitäten oder Fluoreszenzintensitäten im Potentialbereich erfasst und die größte Änderung mit dem zugehörigen Potential ermittelt wurde. Aus dem entsprechenden Potential der höchsten Änderung der Photolumineszenzintensität oder Fluoreszenzintensität (= Maximum der Photolumineszenzintensitätsänderung oder Fluoreszenzintensitätsänderung) wird dann der pH-Wert ermittelt z.B. durch Vergleich mit den Kalibrierkurven und Extrapolation oder Abschätzung der Zwischenwerte.

Dieses Verfahren hat den besonderen Vorteil, dass das Potential wesentlich genauer messbar ist, als die Photolumineszenzintensität oder Fluoreszenzintensität. Die Ermittlung des Maximums der Änderung der Photolumineszenzintensität oder Fluoreszenzintensität ist weitgehend unabhängig von Trübungen der Lösung. Daher ist mit diesem Verfahren eine genauere Bestimmung des pH-Wertes möglich. Meist liegt die Messzeit nach diesem Verfahren innerhalb von einer Sekunde, da zum einen der Potentialbereich eingeschränkt wird. Zum anderen werden nicht alle zwischenliegenden Potentiale angelegt, sondern bevorzugt in Potentialschritten von 1 mV bis ca. 100 mV nur ausgewählte zwischenliegende Potentiale gemessen.

Die erfindungsgemäße Ausführung ist nachfolgend erläutert, wobei die Erfindung alle nachfolgend aufgeführten bevorzugten Ausführungsformen umfasst.

### [Ausführungsbeispiele]

### Beispiel 1:

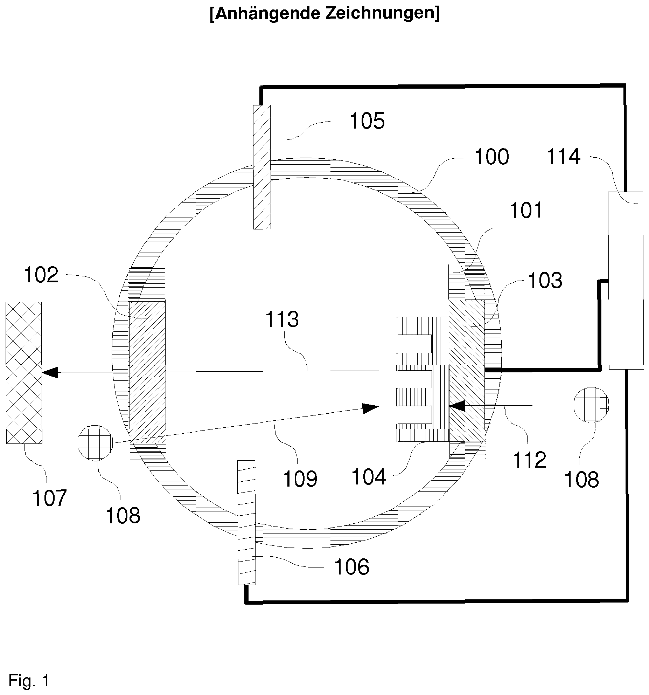

In Fig. 1 wird in einem Abschnitt eines Rohres **100** eine abgeflachte Stelle **101** ausgebildet. Die dadurch entstehenden gegenüberliegenden Wände werden mit Ausnehmungen für das transparente Fenster **102** und den Sensor versehen. Die Trägerschicht des Sensors **103** wird z.B. aus p-Typ dotiertem Silizium (111) hergestellt. Alternativ verwendet man n-Typ dotiertes Silizium (111). Auf die Trägerschicht **103** wird mittels Plasma-assistierter-Molekular-Strahl Epitaxie die photolumineszierende Schicht **104** als Nanodrahtstruktur aufgebracht. Die Nanodrahtstruktur besteht aus einem Gemisch aus Galliumnitrid und Indiumgalliumnitrid..

Die Nanodrähte haben einen Durchmesser von bis zu 200 nm, bevorzugt 30 nm bis 50 nm und eine Länge von 60 nm bis 700 nm, bevorzugt 100 nm bis 400 nm.

Der so hergestellte Sensor wird in eine Ausnehmung in der abgeflachten Stelle **101** des Rohres **100** eingesetzt. In die Ausnehmung gegenüber wird das UV/VIS - transparente Fenster **102** eingebracht. Die Nanodrahtseite **104** des Sensors zeigt zum Fenster **102** und steht mit dem Medium innerhalb des Rohres in Kontakt.

Die Referenzelektrode **105** und die Gegenelektrode **106** werden in das Rohr eingelassen. Die Elektroden (Arbeitselektrode = photolumineszierende Schicht **104** in Verbindung mit dem elektrisch leitenden Träger **103,** Referenzelektrode **105** und Gegenelektrode **106)** werden mit der Ansteuerung **114** kontaktiert.

Außerhalb des Rohres **100** wird hinter dem transparenten Fenster **102** ein Detektor **107** (z.B. Photodiode oder CCD-Sensor) und eine Anregungsquelle **108** angebracht. Die Anregungsquelle **108** besteht aus einer UV-LED, einer blauen oder grünem Leuchtdiode (LED) oder einem Laser oder Laserdiode (z.B. HeCd-Laser). Zur verbesserten Anregung wird das Anregungslicht durch Linsen, Gitter, Filter oder Kombinationen dieser geleitet. Das transparente Fenster **102** ist ebenfalls zumindest teilweise als optisch aktives Bauteil (z.B. als Linse, Filter, Gitter) ausführbar.

Zur Kalibrierung des Sensors werden verschiedene Lösungen mit unterschiedlichen pH-Werten durch das Rohr und über den Sensor geleitet. Weiterhin wird an den Elektroden ein Potential angelegt. Das Potential ermöglicht den Betrieb unter optimierten Bedingungen (bzgl. Lebensdauer, pH-Sensitivität und Lumineszenzintensität). Zusätzlich wird die Anregungslichtquelle **108** auf die Nanodrahtstruktur **104** gerichtet und die entsprechenden Photolumineszenzintensitäten **113** ermittelt. Zur verbesserten Ermittlung der Photolumineszenz wird das Anregungslicht durch einen Filter entfernt. Alternativ dazu wird der Laser **108** rückseitig angeordnet und damit eine rückseitige Anregung **112** durchgeführt.

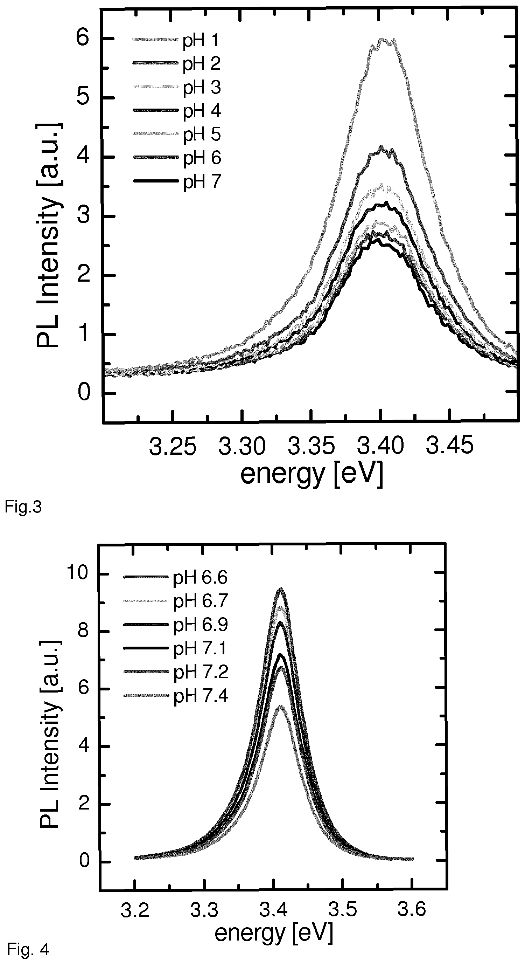

Die Photolumineszenzintensitäten spalten sich durch das Potential in unterscheidbare Bereiche auf. Während in Fig. 3 (ohne Potential) die pH-Werte 4 bis 7 kaum durch die Photolumineszenzintensitäten unterscheidbar sind, ist in Fig. 4 sogar der Nachkommabereich der pH-Werte durch die Photolumineszenzintensitäten durch die Anlegung von -1000 mV an n-Typ dotiertes Silizium unterscheidbar. Die Kalibrierung wird bevorzugt für andere Potentiale wiederholt, wobei die Potentiale Werte im Bereich von -600 mV bis -1000 mV, z.B. 650, 700, 750, 800, 850, 950 mV bei n-Typ dotiertem Silizium, im Bereich von +600 mV bis +1300 mV z.B. 650, 700, 750, 800, 850, 900, 950, 1050, 1100, 1150, 1200, 1250 mV bei p-Typ dotiertem Silizium aufweisen.

Nach der Kalibrierung wird das zu messende Medium z.B. Trinkwasser durch das Rohr geleitet.

An den Sensor wird ein Potential z.B. von -900 mV bei n-Typ dotiertem Silizium, +1000 mV bei p-Typ dotiertem Silizium angelegt. Anschließend erfolgt die Anregung mit dem Laser und die Erfassung der Photolumineszenzintensitäten. Mittels der Kalibrierkurven wird der pH-Wert ermittelt.

Das Potential ist nach einem Messzyklus (Potentialeinstellung, Anregung) veränderbar, so dass ein optimales Potential in Hinblick auf, elektrochemische Stabilität des Sensors gegen das Medium, Intensität der Photolumineszenz und Sensitivität eingestellt wird.

Beispiel 2:

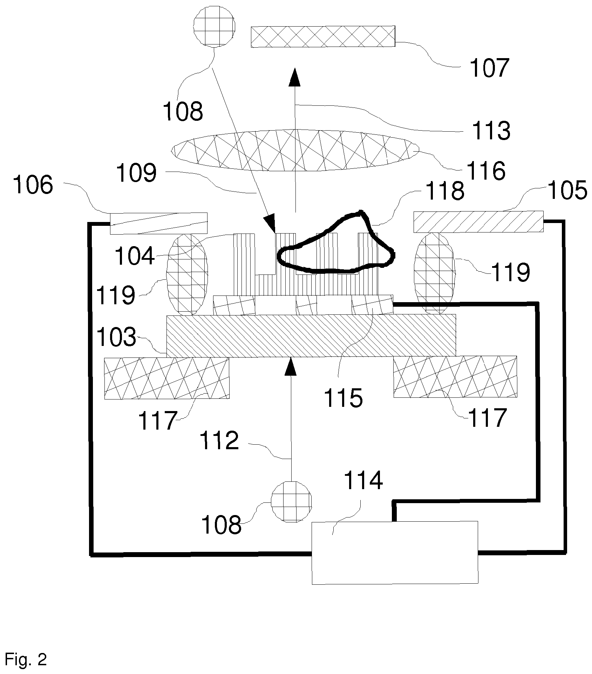

In Fig. 2 wird der Sensor in einem Mikroskop eingesetzt. Hierbei wird der transparente Träger **103** aus Saphir als Objektträger verwendet und auf dem Mikroskoptisch **117** angeordnet. Der Träger **103** wird mit einer elektrisch leitenden Zwischenschicht **115** versehen. Bevorzugt wird dabei dotiertes Aluminiumgalliumnitrid oder Galliumnitrid oder Indium-Zinn-Oxid (ITO) mittels PVD als durchgängige Schicht oder als Gitter möglichst dünn (0,2 bis 100 µm) aufgetragen. Anschließend wird die Zwischenschicht mit Nanostrukturen **104** aus Galliumnitrid beschichtet. Das wird mittels Plasmaunterstützte-Molekular-Strahl Epitaxie durchgeführt. Die Nanodrähte haben einen Durchmesser von bis zu 300 nm, bevorzugt 30 nm bis 50 nm und eine Länge von 60 nm bis 900 nm, bevorzugt 100 bis 500 nm. Zusätzlich werden Indium- Galliumnitrid Quantenpunkte in der Galliumnitrid-Matrix aufgewachsen. Diese zeigen ebenfalls eine pH-Wert abhängige Photolumineszenz deren Intensität und Sensitivität durch ein Potenzial kontrolliert wird.

Alternativ werden GaN-Nanodrähte mit eingelagerten InGaN-Bereichen verwendet. Damit wurde eine fluoreszierende und photolumineszierende Nanodrahtstruktur **104** erhalten.

Auf den Träger **103** wird ein Dichtring **119** aufgesetzt, woduch ein Behälter für Objekte z.B. Nährmedium einer biologischen Zelle **118** gebildet wird. Die Nanodrahtstruktur 104 steht mit dem Objekt (z.B. Nährmedium einer biologischen Zelle **118** bzw. die biologische Zelle **118)** in Kontakt. Weiterhin werden die Referenzelektrode **105** und die Gegenelektrode **106** in Kontakt mit dem Nährmedium gebracht. Die Elektroden (Arbeitselektrode = fluoreszierende und photolumineszierende Schicht **104** in Verbindung mit der elektrisch leitenden Zwischenschicht **115,** Referenzelektrode **105** und Gegenelektrode **106)** werden mit der Ansteuerung **114** kontaktiert.

Das Mikroskop weist weiterhin mindestens eine Anregungsquelle **108** zur Anregung der Photolumineszenz oder Fluoreszenz auf. Die Anregungsquelle **108** ist als Leuchtdiode (LED) oder Laserdiode mit einer Emmisionswellenlänge 405 nm (z.B. aus InGaN) oder frequenzverdoppelter Nd:YVO₄-Laser (532 nm) ausgeführt. Die Verwendung einer Wellenlänge in VIS-Bereich hat den Vorteil, dass die biologische Zelle **118** nicht durch UV-Licht in relevanten Funktionen zerstört wird. Die Anregungsquelle **108** wird bevorzugt so angeordnet, dass die Nanodrahtstruktur **104** durch den Träger **103** (rückseitig) zur Fluoreszenz angeregt wird **112.** Alternativ wird die Anregungsquelle **108** (LED, InGaN, 405 nm) so angeordnet, dass die Nanodrahtstruktur **104** auch auf der Seite der Nanostruktur angeregt wird **109.** Hierbei ist die Strahlführung über das Linsensystem oder Optiksystem (das Linsen, Filter, Gitter, weitere optische Elemente umfasst) **116** des Mikroskops führbar. Die emittierte Fluoreszenz **113** der Nanodrahtstruktur **104** wird bevorzugt durch das Linsensystem **116** des Mikroskops geleitet, die Anregungswellenlänge ausgefiltert und in dem ortsaufgelösten Detektor **107** erfasst.

Statt der Ausfilterung der Anregungswellenlänge ist die Verwendung eines Choppers für die Anregung und Messung mit dem Lock-In Effekt verwendbar.

Die Kalibrierung erfolgt indem verschiedene Lösungen (Medien) mit unterschiedlichen pH-Werten über den Sensor geleitet werden. Dabei wird mit dem Laser die Fluoreszenz oder Photolumineszenz angeregt und die entsprechenden Fluoreszenzintensitäten oder Photolumineszenzintensitäten ermittelt. Gleichzeitig wird ein Potential an die Elektroden gelegt. Nach einer Messung wird das Potential verändert, die Änderung der Fluoreszenzintensitäten oder Photolumineszenzintensitäten ermittelt und ein nächster Messzyklus gestartet. So werden die Änderungen der Fluoreszenzintensitäten oder Photolumineszenzintensitäten über einen bestimmten Potentialbereich z.B. -650 mV bis -1200 mV (Messungen bei - 700, -750, -800, -850, -900, -950, -1000, -1050, -1100,-1150,-1200 mV) oder +500 mV bis +1300 mV (Messungen bei +500, +510, +520 mV, weiter mit Änderungen von +10 mV bis +1280, 1290,1300 mV) erfasst. Die Potentialänderungen innerhalb der Bereiche sind von 1 mV bis 100 mV variierbar. Dabei wird bevorzugt ein konstanter Erhöhungs- oder Verringerungswert verwendet, aber auch nicht konstante Erhöhungs- oder Verringerungswerte sind verwendbar. Der Potentialbereich ist daher nicht auf die angegebenen Werte begrenzt, sondern lässt Schwankungen von +- 50 mV zu. Insofern ist zu einem Potentialbereich von -650 mV bis -1200 mV auch Potentiale von -625 mV und -600 mV bzw. -1225 mV und -1250 mV zuzurechnen.

Schließlich ermittelt man zu der größten Änderung der Fluorenszenzintensität oder Photolumineszenzintensität das entsprechende Potential. Dieses Potential wird dem entsprechenden pH-Wert des Mediums zugeordnet.

Der besondere Vorteil der Ermittlung der größten Änderung der Fluorenszenzintensität oder Photolumineszenzintensität liegt in der Unabhängigkeit von Trübungen oder anderen intensitätsmindernden Effekten. Es ist damit möglich nur durch die Potentialbestimmung bei der höchsten Änderung der Intensität den pH-Wert zu bestimmen.

In der Messphase wird z.B. eine biologische Zelle **118** auf die Nanodrahtstruktur gebracht. Die entsprechenden Nanodrähte zeigen jetzt den pH-Wert in der lokalen Umgebung der biologischen Zelle an. Damit ist eine ortsaufgelöste Verteilung der pH-Werte in der Umgebung (extrazellulär) oder bei der Verwendung von Nanodrähten auch innerhalb einer biologischen Zelle (intrazellulär) ermittelbar.

Die pH-Wert Ermittlung erfolgt analog zur Kalibrierung. Durch die Anregung der Nanodrähte mit der LED **108** wird eine Fluoreszenz oder Photolumineszenz emittiert. Die Fluoreszenzintensitäten werden erfasst. Gleichzeitig wird ein Potential an den Elektroden angelegt. Bei der nächsten Messung wird das Potential geändert z.B. im Bereich von +400 mV bis +1400 mV oder von -500 mV bis -1200 mV. Während oder nach der Aufnahme aller Fluoreszenzintensitäten werden die Änderungen der Fluoreszenzintensitäten ermittelt und das Potential bei der höchsten Änderung der Fluoreszenzintensitäten ermittelt. Das entsprechende Potential vergleicht man mit den Kalibrierdaten und bestimmt damit den pH-Wert. Der pH-Wert ist mit dieser Methode innerhalb von 1 Sekunde bestimmbar. Eine transiente Messung von pH-Wert Änderungen - auch ohne Kalibrierung - ermöglicht die ortsaufgelöste Messung der biochemischen Aktivität der Zelle.

In einem Beispiel außerhalb der Erfindung kann die Vorrichtung auch durch Aufbringen von Potentialpulsen unterschiedlicher Zeitdauer und Höhe kalibriert werden und dann zur orts- und und zeitaufgelösten mikroskopischen Messungen elektrischer Zellaktivität, z.B. der Aktionspotenziale von Nervenzellen sowie deren Propagation, verwendet werden. Weitere Einsatzgebiete der Erfindung umfassen Rohre oder Behälter z.B. der Nahrungsmittelindustrie, Wasserwirtschaft oder Trinkwasserversorgung für Gebäude, Fahrzeuge Flugzeuge und Schiffe.

### [Abbildungslegenden und Bezugszeichenliste]

Fig. 1 Schematischer seitlicher Aufbau des pH-Wert-Sensors im Rohr
Fig. 2 Schematischer seitlicher Aufbau des pH-Wert-Sensors im Mikroskop
Fig. 3 Aufspaltung der Photolumineszenzintensitäten pro pH-Wert bein einem Potential von -400 mV.
Fig. 4 Aufspaltung der Photolumineszenzintensitäten bei -1000 mV pro pH-Wert bei n-Typ dotiertem Silizium

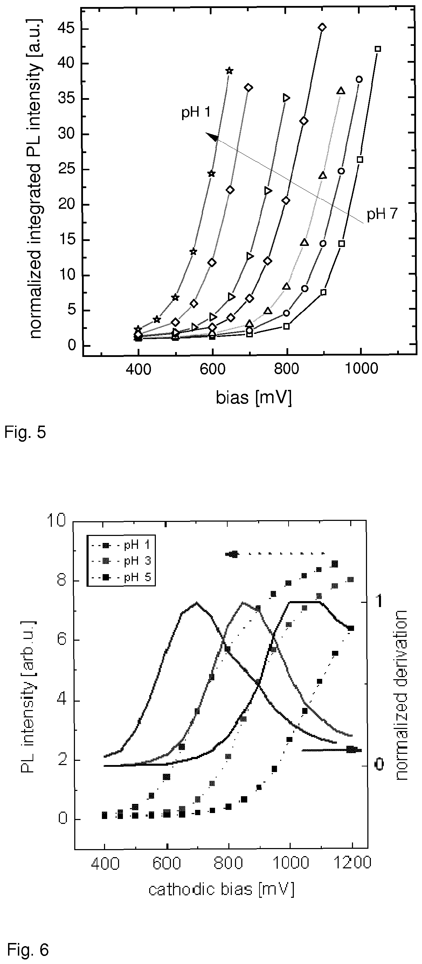

Fig. 5 Verlauf der Photolumineszenzintensitäten pro pH-Wert bei unterschiedlichen Potentialen bei n-Typ dotiertem Silizium
Fig. 6 Verlauf der der Änderung der Photolumineszenzintensitäten pro pH-Wert bei unterschiedlichen Potentialen bei n-Typ dotiertem Silizium

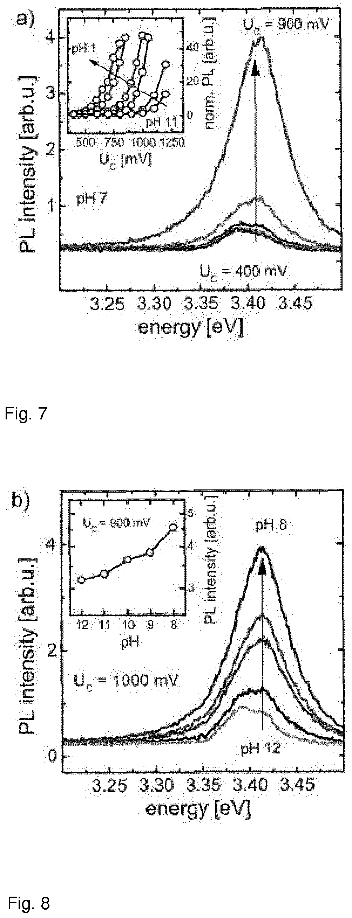

Fig. 7 Aufspaltung der Photolumineszenzintensitäten von 400 bis 900 mV bei pH-Wert 7 bei p-Typ dotiertem Silizium - kleine Abbildung: Verlauf der Änderung der Photolumineszenzintensitäten von pH-Werten 1 bis 11 im Potentialbereich von +500 bis +1300 mV bei p-Typ dotiertem Silizium
Fig. 8 Aufspaltung der Photolumineszenzintensitäten bei 1000 mV mit pH-Werten von 8 bis 12 bei p-Typ dotiertem Silizium

100 Rohr
101 abgeflachte Stelle beim Rohr
102 transparentes Fenster für VIS/UV
103 Trägerschicht des Sensors
104 photolumineszierende oder fluoreszierende Schicht = Arbeitselektrode
105 Referenzelektrode
106 Gegenelektrode
107 ortsaufgelöster Detektor
108 Laser oder LED mit Linsen, Filtern, Vervielfachersystem
109 Anregung der Photolumineszenz oder Fluoreszenz von der Nanostrukturseite
112 Anregung der Photolumineszenz oder Fluoreszenz von der Rückseite
113 Emission der Photolumineszenz oder Fluoreszenz auf den Detektor
114 Ansteuerung der Elektroden
115 leitende Zwischenschicht
116 Linse
117 Objektivtisch
118 biologische Zelle / Objekt
119 Dichtungsring

## Patentansprüche

1. Optischer Sensor für eine pH-Wert-Messung eines Mediums in Mikroskopen, in Rohren oder Behältern umfassend eine photolumineszierende und/oder fluoreszierende Schicht (104), eine Lichtquelle (108), zur Anregung der Photolumineszenz und/oder der Fluoreszenz dieser Schicht, und einen Detektor (107), zur Ermittlung der Photolumineszenzintensität und/oder der Fluoreszenzintensität, und eine Ansteuerung von Elektroden (114) zum Anlegen eines Potentials, wobei der optische Sensor weiterhin eine elektrisch leitende Trägerschicht (103) aufweist, auf der die photolumineszierende und/oder fluoreszierende Schicht (104) aufgetragen ist, wobei die photolumineszierende und/oder fluoreszierende Schicht (104) mindestens einen elektrischen Kontakt mit der Ansteuerung (114) aufweist, so dass an der photolumineszierenden und/oder fluoreszierenden Schicht (104) ein Potential anlegbar ist und diese Schicht (104) in Verbindung mit der Trägerschicht (103) somit als eine Arbeitselektrode elektrisch schaltbar ist und wobei der optische Sensor mit mindestens einer Gegenelektrode (106) und mindestens einer Referenzelektrode (105) ausgestattet ist, die im Kontakt mit dem Medium stehen, und die jeweils mittels mindestens einen elektrischen Kontakt mit der Ansteuerung der Elektroden (114) verbunden sind, wobei die photolumineszierende und/oder fluoreszierende Schicht (104) Nanostrukturen aufweist, die als Nanodrähte ausgebildet sind, wobei der Sensor dazu konfiguriert ist, ein pH-Wert-Messung durchzuführen, die genannte Schicht (104) mit der Lichtquelle anzuregen und die Photolumineszenzintensitäten oder Fluoreszenzintensitäten zu erfassen und gleichzeitig ein Potential an die Arbeitselektrode anzulegen.

2. Optischer Sensor nach Anspruch 1, **dadurch gekennzeichnet, dass** die photolumineszierende oder fluoreszierende Schicht (104) die Materialien Galliumnitrid, Indiumnitrid, Indiumphosphid, Indiumgalliumarsenid, einwandige oder mehrwandige Kohlenstoffnanoröhren, Galliumarsenid, Germanium, Cadmiumselenid, Aluminiumnitrid, Zinkoxid, Cadmiumoxid, Magnesiumoxid oder Indiumaluminiumarsenid umfasst.

3. Optischer Sensor nach Anspruch 1, **dadurch gekennzeichnet, dass** die Nanodrähte Galliumnitrid Nanodrähte sind, die Indiumgalliumnitrid Quantenpunkte oder eingelagerte Indiumgalliumnitrid-Bereiche aufweisen.

4. Optischer Sensor nach Anspruch 1, **dadurch gekennzeichnet, dass** die Gegenelektrode (106) isoliert zur Arbeitselektrode (104) ist.

5. Optischer Sensor nach Anspruch 4, **dadurch gekennzeichnet, dass** eine Dreielektrodenschaltung verwendet wird, sodass die Referenzelektrode (105) von der Gegenelektrode (106) und der Arbeitselektrode (104) elektrisch isoliert ist.

6. Optischer Sensor nach einem der Ansprüche 1 bis 3, **dadurch gekennzeichnet, dass** das Potential einen Bereich von -1500 mV bis +1500 mV aufweist.

7. Verfahren zum Betreiben eines optischen pH-Wert-Sensors nach Anspruch 1, **dadurch gekennzeichnet, dass** an den Elektroden ein Potential vor, während oder nach der Photolumineszenz oder Fluoreszenz angelegt wird, und die Photolumineszenzintensitäten oder Fluoreszenzintensitäten pH-Werten zugeordnet werden.

8. Verfahren nach Anspruch 7, **dadurch gekennzeichnet, dass** bei Variation des Potentials die Photolumineszenzintensitäten oder Fluoreszenzintensitäten gemessen werden, und die Änderungen der Photolumineszenzintensitäten oder Fluoreszenzintensitäten ermittelt werden und das der höchsten Änderung der Photolumineszenzintensitäten oder Fluoreszenzintensitäten entsprechende Potential einem pH-Wert zugeordnet wird.

9. Verwendung des optischen Sensors nach Anspruch 1 für die pH-Wert Messung in der Nahrungsmittelindustrie, Wasserwirtschaft oder Trinkwasserversorgung für Gebäude, Fahrzeuge Flugzeuge und Schiffe.

## Claims

1. Optical sensor for a pH-value measurement of a medium in microscopes, tubes or containers, comprising a photoluminescent and/or fluorescent layer (104), a light source (108) for exciting the photoluminescence and/or the fluorescence of said layer, and a detector (107) for detecting the photoluminescence intensity and/or the fluorescence intensity, and driving electrodes (114) for applying a potential, wherein the optical sensor further comprises an electrically conductive support layer (103) on which the photoluminescent and/or fluorescent layer (104) is deposited, the photoluminescent and/or fluorescent layer (104) having at least one electrical contact with the drive (114), so that a potential can be applied to the photoluminescent and/or fluorescent layer (104) and this layer (104), in conjunction with the carrier layer (103), can thus be electrically switched as a working electrode, and wherein the optical sensor is equipped with at least one counter electrode (106) and at least one reference electrode (105), which are in contact with the medium and which are each connected by means of at least one electrical contact to the drive of the electrodes (114), the photoluminescent and/or fluorescent layer (104) being in the form of nanowires, the sensor being configured to carry out a pH measurement, to excite the said layer (104) with the light source and to detect the photoluminescence intensities or fluorescence intensities and at the same time to apply a potential to the working electrode.

2. Optical sensor according to claim 1, **characterized in that** the photo-luminescent or fluorescent layer (104) comprises the materials gallium nitride, indium nitride, indium phosphide, indium gallium arsenide, single-walled or multi-walled carbon nanotubes, gallium arsenide, germanium, cadmium selenide, aluminium nitride, zinc oxide, cadmium oxide, magnesium oxide or indium alumini-umarsenide.

3. Optical sensor according to claims1, **characterised in that** the nanowires are nanowires having indium gallium nitride quantum dots or intercalated iridium gallium nitride regions.

4. Optical sensor of claim 1, **characterized in that** the counter electrode (106) is insulated from the working electrode (104).

5. Optical sensor according to claim 4, **characterized in that** a three-electrode circuit is used so that the reference electrode (105) is electrically isolated from the counter electrode (106) and the working electrode (104).

6. Optical sensor according to any one of claims 1 to 3, **characterized in that** the potential has a range of -1500 mV to +1500 mV.

7. Method of operating an optical pH sensor according to claim 1, **characterized in that** a potential is applied to the electrodes before, during or after photoluminescence or fluorescence and the photo-luminescence intensities or fluorescence intensities are assigned pH values.

8. Method according to claim 7, **characterized in that** the photoluminescence intensities or fluorescence intensities are measured when the potential is varied and the changes in the photoluminescence intensities or fluorescence intensities are determined and the potential corresponding to the highest change in the photoluminescence intensities or fluorescence intensities is assigned to a pH value.

9. Use of the optical sensor according to claim 1 for pH measurement in the food industry, water management or drinking water supply for buildings, vehicles, aircraft and ships.

## Revendications

1. Capteur optique pour mesurer le pH d'un milieu dans des microscopes, des tubes ou des récipients, comprenant une couche photoluminescente et/ou fluorescente (104), une source de lumière (108) pour exciter la photoluminescence et/ou la fluorescence de ladite couche, et un détecteur (107) pour détecter l'intensité de la photoluminescence et/ou l'intensité de la fluorescence, et des électrodes de commande (114) pour appliquer un potentiel, dans lequel le capteur optique comprend en outre une couche de support électriquement conductrice (103) sur laquelle la couche photoluminescente et/ou fluorescente (104) est déposée, la couche photoluminescente et/ou fluorescente (104) ayant au moins un contact électrique avec le lecteur (114), de sorte qu'un potentiel peut être appliqué à la couche photoluminescente et/ou fluorescente (104) et que cette couche (104) peut ainsi être commutée électriquement comme électrode de travail en liaison avec la couche de support (103), et dans lequel le capteur optique est équipé d'au moins une contre-électrode (106) et d'au moins une électrode de référence (105) qui sont en contact avec le milieu et qui sont chacune reliées par au moins un contact électrique à la commande des électrodes (114), la couche photoluminescente et/ou fluorescente (104) étant sous forme de nanofils, le capteur étant configuré pour effectuer une mesure de pH, pour exciter ladite couche (104) avec la source lumineuse et pour détecter les intensités de photoluminescence ou les intensités de fluorescence et en même temps pour appliquer un potentiel à l'électrode de travail..

2. Capteur optique selon la revendication 1, **caractérisé en ce que** la couche photoluminescente ou fluorescente (104) comprend du nitrure de gallium, du nitrure d'indium, du phosphure d'indium, de l'arséniure d'indium et de gallium, des nanotubes de carbone à une ou plusieurs parois, de l'arséniure de gallium, du germanium, du séléniure de cadmium, du nitrure d'aluminium, de l'oxyde de zinc, de l'oxyde de cadmium, de l'oxyde de magnésium ou de l'alumini-umarséniure d'indium.

3. Capteur optique selon la revendication 1, **caractérisé en ce que** les nanofils sont des nanofils comprenant des points quantiques de nitrure d'indium gallium ou des régions intercalées de nitrure d'iridium gallium.

4. Capteur selon la revendication 1, **caractérisé en ce que** la contre-électrode (106) est isolée de l'électrode de travail (104).

5. Capteur optique selon la revendication 4, **caractérisé en ce qu'**un circuit à trois électrodes est utilisé de sorte que l'électrode de référence (105) est électriquement isolée de la contre-électrode (106) et de l'électrode de travail (104).

6. Capteur optique selon l'une quelconque des revendications 1 à 3, **caractérisé en ce que** le potentiel a une plage de -1500 mV à +1500 mV.

7. Procédé de fonctionnement d'un capteur optique de pH selon la revendication 1, **caractérisé en ce qu'**un potentiel est appliqué aux électrodes avant, pendant ou après la photoluminescence ou la fluorescence et les intensités de photo-luminescence ou les intensités de fluorescence sont affectées à des valeurs de pH.

8. Procédé selon la revendication 7, **caractérisé en ce que**, lorsque le potentiel varie, les intensités de photoluminescence ou les intensités de fluorescence sont mesurées et les variations des intensités de photoluminescence ou des intensités de fluorescence sont déterminées et le potentiel correspondant à la variation la plus élevée des intensités de photoluminescence ou des intensités de fluorescence est attribué à une valeur de pH.

9. Utilisation du capteur optique selon la revendication 1 pour la mesure du pH dans l'industrie alimentaire, la gestion de l'eau ou l'approvisionnement en eau potable pour les bâtiments, les véhicules, les avions et les navires.
